# EUROPÄISCHE PATENTANMELDUNG

(11) **EP 2 730 476 A1**
(43) Veröffentlichungstag der Anmeldung: **14.05.2014**
(21) Anmeldenummer: 13187022.2
(22) Anmeldetag: 02.10.2013
(51) Int. Cl.: B60W 20/00, B60W 30/18, B60W 10/02, B60W 10/06, B60W 10/08, B60W 10/11, B60W 10/30

(54) **Verfahren sowie Steuerungseinrichtung zum Betreiben eines Hybridfahrzeugs**

(30) Priorität: 09.11.2012 DE 102012220478
(71) Anmelder: ZF Friedrichshafen AG, 88038 Friedrichshafen (DE)
(72) Erfinder: Borntraeger, Kai, 88085 Langenargen (DE); Mittelberger, Christian, 88212 Ravensburg (DE); Banerjee, Alexander, 88094 Oberteuringen (DE); Kaltenbach, Johannes, 88048 Friedrichshafen (DE)

(57) **Zusammenfassung**

Verfahren zum Betreiben eines Hybridfahrzeugs, mit einem einen Verbrennungsmotor (1) und eine elektrische Maschine (2) aufweisenden Hybridantrieb und mit einer Start-Stopp-Automatik für den Verbrennungsmotor (1) des Hybridantriebs, wobei zum Starten des Verbrennungsmotors (1) aus dem Stillstand des Hybridfahrzeugs heraus der Verbrennungsmotor (1) mit Hilfe der elektrische Maschine (2) zunächst in einem drehzahlgeregelten Betrieb derselben auf einen Mindestdrehzahl anschleppt und erst anschließend der Verbrennungsmotor (1) durch Einbringen von Kraftstoff in denselben befeuert wird, und wobei zur Verkürzung einer Verzögerungszeit zwischen einer Startanforderung für den Verbrennungsmotor (1) und einem Anfahrvorgang des Hybridfahrzeugs während des Anschleppens des Verbrennungsmotors (1) auf die Mindestdrehzahl bei einem in einem Getriebe (4) des Hybridfahrzeugs eingelegten Gang ein zwischen die elektrische Maschine (2) und einen Abtrieb (3) des Hybridfahrzeugs geschaltetes Schaltelement (6, 10, 13) im Schlupf betrieben wird, nämlich derart, dass mit dem Erreichen einer unterhalb der Mindestdrehzahl liegenden Anfahrdrehzahl der Anfahrvorgang beginnt.

## Beschreibung

Die Erfindung betrifft ein Verfahren zum Betreiben eines Hybridfahrzeugs. Des Weiteren betrifft die Erfindung eine Steuerungseinrichtung zur Durchführung des Verfahrens.

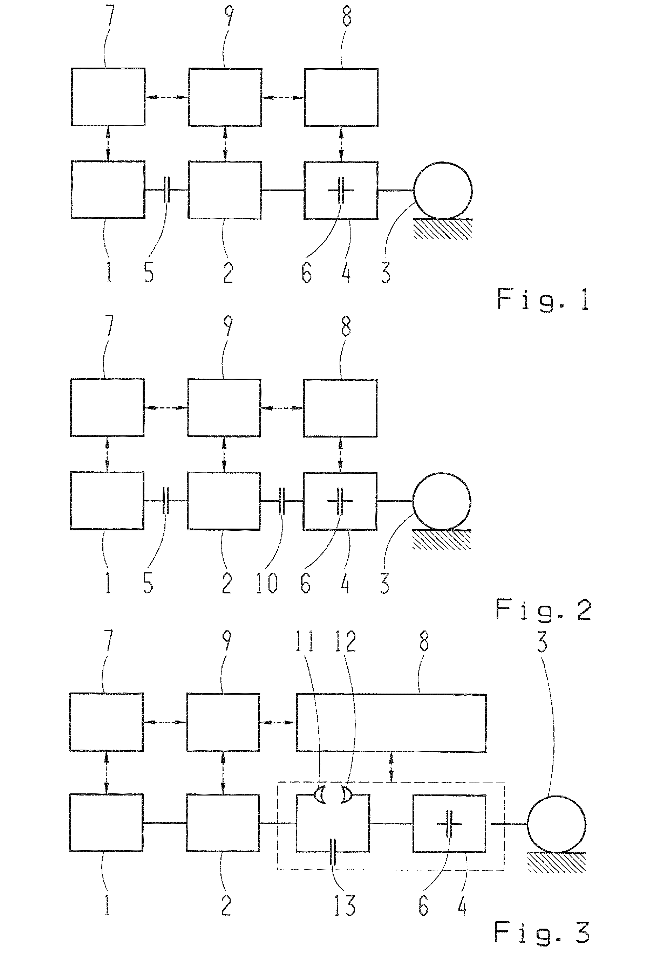

Fig. 1 bis 3 zeigen aus der Praxis bekannte Antriebsstrangschemata von Hybridfahrzeugen.

So zeigt Fig. 1 ein Antriebsstrangschema eines Hybridfahrzeugs, welches einen Hybridantrieb umfassend einen Verbrennungsmotor 1 und eine elektrische Maschine 2 aufweist, wobei zwischen die elektrische Maschine 2 des Hybridantriebs und einen Abtrieb 3 ein Getriebe 4 geschaltet ist. Ferner ist zwischen den Verbrennungsmotor 1 und die elektrische Maschine 2 eine Trennkupplung 5 geschaltet, die dann, wenn das Hybridfahrzeug rein elektrisch betrieben wird, geöffnet ist. Das Getriebe 4 umfasst mehrere getriebeinterne Schaltelemente 6. Der Betrieb des Verbrennungsmotors 1 wird von einer Motorsteuerungseinrichtung 7, der Betrieb des Getriebes 4 von einer Getriebesteuerungseinrichtung 8 und der Betrieb der elektrischen Maschine 2 von einer Hybridsteuerungseinrichtung 9 gesteuert und/oder geregelt, wobei die Steuerungseinrichtungen 7, 8 und 9 gemäß den gestrichelten Pfeilen der Fig. 1 einerseits mit den zu betreibenden Baugruppen 1, 2 und 4 und andererseits untereinander Daten austauschen.

Das Hybridfahrzeug gemäß Fig. 2 unterscheidet sich vom Hybridfahrzeug der Fig. 1 dadurch, dass zusätzlich zwischen die elektrische Maschine 2 und das Getriebe 4 ein getriebeexternes Schaltelement 10 geschaltet ist.

Das Hybridfahrzeug der Fig. 3 umfasst ein als Wandler-Automatgetriebe ausgebildetes Getriebe, wobei zwischen das eigentliche Getriebe 4 und die elektrische Maschine 2 ein hydrodynamischer Wandler geschaltet ist, von welchem eine Wandlerpumpe 11, eine Wandlerturbine 12 und eine Wandlerüberbrückungskupplung 13 gezeigt sind. In Fig. 3 ist zwischen dem Verbrennungsmotor 1 und die elektrische Maschine 2 keine Trennkupplung 5 geschaltet. Im Unterschied zu Fig. 3 kann jedoch auch in der Variante der Fig. 3 eine Trennkupplung 5 vorhanden sein.

Aus der Praxis ist es weiterhin bekannt, dass Hybridfahrzeuge eine Start-Stopp-Automatik für den Verbrennungsmotor 1 aufweisen, um dann, wenn der Verbrennungsmotor 1 für den Betrieb des Hybridfahrzeugs nicht benötigt wird, den Verbrennungsmotor 1 still zu setzen und vom Abtrieb 3 abzukoppeln. Ist fahrsituationsbedingt nachfolgend der Betrieb des Verbrennungsmotors 1 erforderlich, so muss derselbe zugestartet werden.

So offenbart die DE 103 53 256 B3 ein Hybridfahrzeug gemäß Fig. 2 mit einer Start-Stopp-Automatik, wobei zum Starten des Verbrennungsmotors während der Fahrt des Hybridfahrzeugs ein gezielter Schlupfbetrieb an dem zwischen die elektrische Maschine und das Getriebe geschalteten Schaltelement eingestellt wird, um Drehschwingungen zu kompensieren.

Zum Zustarten eines Verbrennungsmotors eines Hybridantriebs aus dem Stillstand desselben heraus wird nach Praxis so vorgegangen, dass der Verbrennungsmotor mit Hilfe der elektrischen Maschine zunächst in einem drehzahlgeregelten Betrieb der elektrischen Maschine auf eine Mindestdrehzahl angeschleppt wird, wobei erst anschließend an das Erreichen der Mindestdrehzahl der Verbrennungsmotor durch Einbringen von Kraftstoff in denselben befeuert wird. Dies ist erforderlich, damit sich in Lagern des Hybridfahrzeugs ein ausreichender Schmierfilm aufbauen kann, um Beschädigungen infolge einer nicht ausreichenden Schmierfilmung zu vermeiden.

Nach der Praxis kann erst dann, wenn der Verbrennungsmotor befeuert wird, mit dem Anfahrvorgang begonnen werden. Hierbei bildet sich dann nach der Praxis eine relativ lange Verzögerungszeit für einen Anfahrvorgang des Hybridfahrzeugs aus. Dies führt dazu, dass eine Start-Stopp-Automatik nicht konsequent genutzt wird und so nicht alle Einsparpotenziale derselben genutzt werden können.

Es besteht daher Bedarf an einem Verfahren zum Betreiben eines Hybridfahrzeugs, mit welchem einerseits eine ausreichende Schmierung in Lagern des Hybridfahrzeugs gewährleistet werden kann, und mit welchem andererseits eine Verzögerungszeit für den Anfahrvorgang verkürzt werden kann, um so die Akzeptanz einer Start-Stopp-Automatik zu erhöhen.

Hiervon ausgehend liegt der vorliegenden Erfindung die Aufgabe zu Grunde, ein neuartiges Verfahren zum Betreiben eines Hybridfahrzeugs sowie eine neuartige Steuerungseinrichtung zu schaffen.

Diese Aufgabe wird durch ein Verfahren zum Betreiben eines Hybridfahrzeugs gemäß Patentanspruch 1 gelöst.

Erfindungsgemäß wird zur Verkürzung einer Verzögerungszeit zwischen einer Startanforderung für den Verbrennungsmotor und einem Anfahrvorgang des Hybridfahrzeugs während des Anschleppens des Verbrennungsmotor auf die Mindestdrehzahl bei einem in einem Getriebe des Hybridfahrzeugs eingelegten Gang ein zwischen die elektrische Maschine und einen Abtrieb des Hybridfahrzeugs geschaltetes Schaltelement im Schlupf betrieben, nämlich derart, dass mit dem Erreichen einer unterhalb der Mindestdrehzahl liegenden Anfahrdrehzahl der Anfahrvorgang beginnt.

Mit dem erfindungsgemäßen Verfahren wird die Verzögerungszeit für einen sich an eine Startanforderung für den Verbrennungsmotor anschließenden Anfahrvorgang des Hybridfahrzeugs verkürzt, wobei jedoch weiterhin der Aufbau einer ausreichenden Schmierung in den Lagern des Hybridfahrzeugs gewährleistet werden kann, sodass Beschädigungen infolge einer nicht ausreichenden Schmierfilmung vermieden werden können.

Vorzugsweise wird das im Schlupf betriebene Schaltelement spätestens mit Erreichen der Anfahrdrehzahl soweit geschlossen, dass dasselbe ein einem Anfahrwiderstand entsprechendes Drehmomentäquivalent überträgt. Eine solche Ausgestaltung erlaubt einen besonders vorteilhaften Anfahrvorgang, wobei vorzugsweise das Schlupfelement mit Erreichen der Anfahrdrehzahl auf die obige Art und Weise geschlossen wird.

Die elektrische Maschine stellt im drehzahlgeregelten Betrieb während des Anfahrvorgangs ein Anschleppmoment für den Verbrennungsmotor und weiterhin ein Anfahrmoment für das Hybridfahrzeug bereit. Dies ist nur bis zum Erreichen des maximalen Moments der elektrischen Maschine möglich, wobei die elektrische Maschine hinsichtlich ihres maximal bereitstellbaren Drehmoments diesbezüglich ausgelegt ist.

Nach einer Weiterbildung wird dann, wenn eine Schlupfdrehzahldifferenz an dem im Schlupf betriebenen Schaltelement vor Beendigung des Verbrennungsmotorstarts zu gering wird, das im Schlupf betriebene Schaltelement durch Absenken der Übertragungsfähigkeit desselben weiter geöffnet. Hiermit kann vermieden werden, dass sich das Zustarten des Verbrennungsmotors am Abtrieb negativ auswirkt.

Nach einer weiteren Weiterbildung wird dann, wenn mit der Befeuerung des Verbrennungsmotors begonnen wurde, eine zwischen den Verbrennungsmotor und die elektrische Maschine geschaltete Trennkupplung derart geöffnet, dass der Verbrennungsmotor nach Beginn der Befeuerung aus eigner Kraft auf Leerlaufdrehzahl hoch läuft. Mit dieser Weiterbildung der Erfindung kann die thermische Belastung an schlupfend betriebenen Schaltelementen reduziert werden.

Die erfindungsgemäße Steuerungseinrichtung zur Durchführung des Verfahrens ist in Patentanspruch 11 definiert.

Bevorzugte Weiterbildungen ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Darstellung eines ersten Antriebsstrangs eines Hybridfahrzeugs;
- Fig. 2: eine Darstellung eines zweiten Antriebsstrangs eines Hybridfahrzeugs;
- Fig. 3: eine Darstellung eines dritten Antriebsstrangs eines Hybridfahrzeugs; und
- Fig. 4: ein Diagramm zur Verdeutlichung des erfindungsgemäßen Verfahrens zum Betreiben eines Hybridfahrzeugs.

Die hier vorliegende Erfindung betrifft ein Verfahren zum Betreiben eines Hybridfahrzeugs, nämlich zum Starten des Verbrennungsmotors aus dem Stillstand des Hybridfahrzeugs heraus mit Hilfe einer Start-Stopp-Automatik, die bei Vorliegen einer Startanforderung für den still gesetzten Verbrennungsmotor denselben zustartet.

Die Erfindung findet vorzugsweise bei den in Fig. 1 bis 3 gezeigten Hybridfahrzeugen Anwendung, dieselbe kann jedoch auch bei anderen Antriebsstrangkonfigurationen von Hybridfahrzeugen Verwendung finden.

Dann, wenn im Stillstand des Hybridfahrzeugs eine Startanforderung für den Verbrennungsmotor 1 vorliegt, wird der Verbrennungsmotor 1 mit Hilfe der elektrischen Maschine 2 zunächst in einem drehzahlgeregelten Betrieb der elektrischen Maschine 2 auf eine Mindestdrehzahl angeschleppt, wobei erst anschließend der Verbrennungsmotor 1 durch Einbringen von Kraftstoff in denselben befeuert wird. Die Trennkupplung 5 ist hierbei geschlossen.

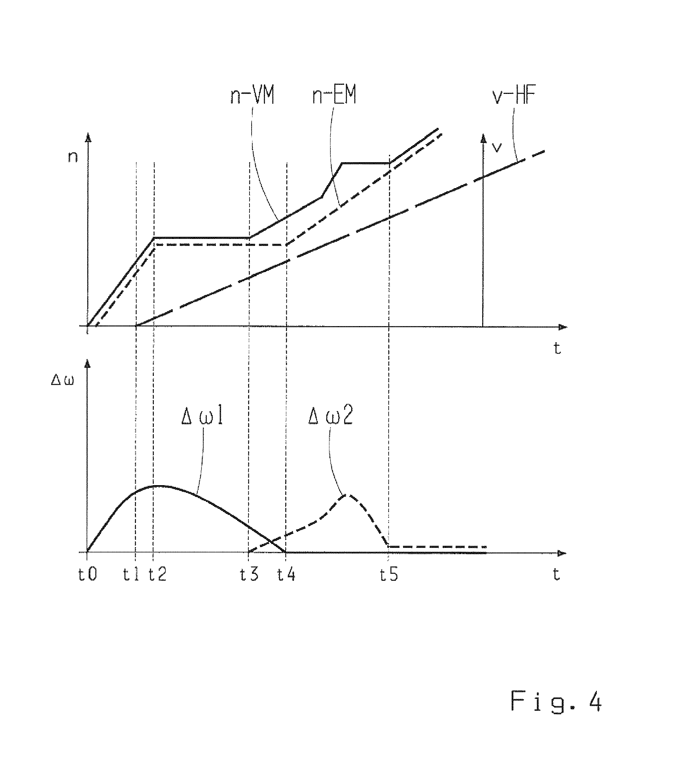

Fig. 4 zeigt über der Zeit t Drehzahlverläufe n-EM für die elektrische Maschine 2 und n-VM für den Verbrennungsmotor 1 beim Zustarten des Verbrennungsmotors 1, wobei gemäß Fig. 4 die elektrische Maschine 2 ausgehend von einer Verbrennungsmotorstartanforderung zum Zeitpunkt t0 bis zum Zeitpunkt t2 rampenartig auf die Mindestdrehzahl beschleunigt wird, und wobei zwischen den Zeitpunkten t2 und t4 die Drehzahl n-EM der elektrischen Maschine 2 auf dieser Mindestdrehzahl konstant gehalten wird. Beginnend mit dem Zeitpunkt t3 wird der Verbrennungsmotor 1 durch Einbringen von Kraftstoff befeuert. Vor dem Zeitpunkt t3 liegt demnach ein unbefeuerter Verbrennungsmotor 1 und nach dem Zeitpunkt t3 ein befeuerter Verbrennungsmotor 1 vor.

Um nun eine Verzögerungszeit zwischen der Startanforderung für den Verbrennungsmotor 1 und einem Anfahrvorgang des Hybridfahrzeugs zu verkürzen, wird erfindungsgemäß während des Anschleppens des Verbrennungsmotors 1 auf die Mindestdrehzahl bei einem in dem Getriebe 4 des Hybridfahrzeugs eingelegten Gang ein zwischen die elektrische Maschine 2 und einen Abtrieb 3 des Hybridfahrzeugs geschaltetes Schaltelement im Schlupf betrieben, nämlich derart, dass mit Erreichen einer unterhalb der Mindestdrehzahl liegenden Anfahrdrehzahl der Anfahrvorgang beginnt.

Im Diagramm der Fig. 4 ist zusätzlich zu den Drehzahlen n-EM von elektrischer Maschine 2, die im drehzahlgeregelten Betriebsmodus betrieben wird, und n-VM von Verbrennungsmotor 1 eine sich bei Nutzung des erfindungsgemäßen Verfahrens ausbildende Geschwindigkeit v-HF des Hybridfahrzeugs eingetragen.

Gemäß Fig. 4 beginnt vor dem Zeitpunkt t2, also vor dem Erreichen der Mindestdrehzahl für das Befeuern des Verbrennungsmotors 1, der Anfahrvorgang, nämlich zum Zeitpunkt t1. Ferner zeigt Fig. 4, dass für diesen Anfahrvorgang ein zwischen die elektrische Maschine 2 und den Abtrieb 3 des Hybridfahrzeugs geschaltetes Schaltelement im Schlupf betrieben wird, wobei Fig. 4 den Schlupfdrehzahlverlauf Δω1 für dieses Schaltelement zeigt. Zum Zeitpunkt t1 beginnt die Drehmomentübertragung und damit der Anfahrvorgang.

Bei dem im Schlupf betriebenen Schaltelement mit dem Schlupfdrehzahlverlauf Δω1 handelt es sich beim Antriebsstrang der Fig. 1 um eines der getriebeinternen Schaltelemente 6. Beim Antriebsstrang der Fig. 2 kann es sich bei diesem im Schlupf betriebenen Schaltelement alternativ um das getriebeexterne Schaltelement 10 und beim Antriebsstrang der Fig. 3 um die Wandlerüberbrückungskupplung 13 handeln.

Vorzugsweise wird das im Schlupf betriebene Schaltelement 6 bzw. 10 bzw. 13 spätestens mit Erreichen der unterhalb der Mindestdrehzahl liegenden Anfahrdrehzahl soweit geschlossen, dass dasselbe ein einem Anfahrwiderstand entsprechendes Drehmomentäquivalent überträgt. Hierzu wird die Übertragungsfähigkeit des im Schlupf betriebenen Schaltelements 6 bzw. 10 bzw. 13 auf dieses Drehmomentäquivalent erhöht.

Besonders bevorzugt ist eine Variante, in welcher vor dem Erreichen der Anfahrdrehzahl, also vor dem Zeitpunkt t1, das im Schlupf betriebene Schaltelement 6 bzw. 10 bzw. 13 ausschließlich bis zum sogenannten Anlegepunkt geschlossen ist, und dass mit Erreichen dieser Anfahrdrehzahl die Übertragungsfähigkeit des zuvor bis zum Anlegepunkt geschlossenen Schaltelements 6 bzw. 10 bzw. 13 auf das dem Anfahrwiderstand entsprechende Drehmomentäquivalent erhöht wird.

Dann, wenn der Anfahrvorgang zum Zeitpunkt t1 mit der im drehzahlgeregelten Betrieb betriebenen elektrischen Maschine 2 beginnt, stellt die elektrische Maschine 2 ein Gesamtmoment bereit, welches dem Summenmoment aus dem Anschleppmoment für den Verbrennungsmotor 1 und dem Anfahrmoment für das Hybridfahrzeug entspricht. Ein von der elektrischen Maschine 2 maximal bereitstellbares Drehmoment ist bezüglich dieser Anforderung ausgelegt. Zum Zeitpunkt t1 kann das von der elektrischen Maschine 2 bereitgestellte Moment zum Anfahren erhöht werden.

Nach einer vorteilhaften Weiterbildung der Erfindung ist vorgesehen, dass dann, wenn die Schlupfdifferenzdrehzahl Δω1 an dem im Schlupf betriebenen Schaltelement 6 bzw. 10 bzw. 13 vor Beendigung des Verbrennungsmotorstarts zu gering wird, das im Schlupf betriebene Schaltelement 6, 10 bzw. 13 durch Absenken der Übertragungsfähigkeit desselben weiter geöffnet wird. Hierdurch kann sichergestellt werden, dass die Beschleunigung des Hybridfahrzeugs nicht dazu führt, dass das im Schlupf betriebene Schaltelement 6 bzw. 10 bzw. 13 vor Beendigung des Verbrennungsmotorstarts schließt, also den Synchronpunkt erreicht oder gar überfährt, was zu Drehmomentschwingungen am Abtrieb 3 führen würde. Dann, wenn das im Schlupf betriebene Schaltelement den Synchronpunkt überfahren würde, würde dies zu einem Bremsmoment am Abtrieb 3 und zu einem Hochreißen der Drehzahl des Verbrennungsmotors 1 führen. Dies kann durch diese vorteilhafte Weiterbildung der Erfindung vermieden werden.

Nach einer weiteren vorteilhaften Weiterbildung der Erfindung ist vorgesehen, dass dann, wenn mit der Befeuerung des Verbrennungsmotors 1 zum Zeitpunkt t3 begonnen wurde, eine zwischen den Verbrennungsmotor 1 und die elektrische Maschine 2 geschaltete Trennkupplung 5 derart schlupfend geöffnet wird, dass der Verbrennungsmotor 1 nach Beginn der Befeuerung zum Zeitpunkt t3 aus eigener Kraft auf Leerlaufdrehzahl hoch läuft. Hierdurch kann der Schlupf Δω1 an dem im Schlupf betriebenen Schaltelement 6, 10 bzw. 13 früher abgebaut werden, wodurch sich die thermische Belastung desselben verringert.

In diesem Fall kann ein Anfahrvorgang über die zwischen Verbrennungsmotor 1 und die elektrische Maschine 2 geschaltete Trennkupplung 5 fortgesetzt werden. Ist zum Beispiel die elektrische Maschine 2 hinsichtlich des von derselben bereitstellbaren Drehmoments limitiert und kann der Fahrwiderstand nur in Kombination von Verbrennungsmotor 1 und der elektrischen Maschine 2 überwunden werden, so kann dies dann im schlupfenden Betrieb der Trennkupplung 5 realisiert werden. In diesem Fall überträgt die Trennkupplung 5 das Drehmoment des Verbrennungsmotors 1. Das getriebeinterne oder getriebeexterne Schaltelement 6 bzw. 10 bzw. 13 überträgt das Summenmoment von Verbrennungsmotor 1 und elektrischer Maschine 2.

Fig. 4 zeigt den Schlupfdrehzahlverlauf Δω2 für die Trennkupplung 5. Vor dem Zeitpunkt t3 ist die Trennkupplung 5 haftend geschlossen und es besteht Drehzahlgleichheit zwischen elektrischer Maschine 2 und Verbrennungsmotor 1. Beginnend mit dem Zeitpunkt t3 wird die Trennkupplung 5 in Schlupf gebracht und die Verbrennungsmotordrehzahl n-VM kann sich von der Drehzahl n-EM der elektrischen Maschine 2 lösen. Der Verbrennungsmotor 1 läuft dann aus eigener Kraft auf Leerlaufdrehzahl hoch. Das Hybridfahrzeug wird nicht nur zwischen den Zeitpunkten t1 und t3 sondern auch nach dem Zeitpunkt t3 weiter beschleunigt.

Zum Zeitpunkt t4 ist der Schlupf an dem zwischen die elektrische Maschine 2 und den Abtrieb 3 geschalteten Schaltelement 6, 10 bzw. 13 vollständig abgebaut. Die Trennkupplung 5 wird zum Zeitpunkt t4 weiterhin im Schlupf betrieben, wobei sich die Drehzahl n-EM der elektrischen Maschine 2 ab dem Zeitpunkt t4 weiter erhöht.

Zum Zeitpunkt t5 ist auch der Schlupf an der Trennkupplung 5 abgebaut und die elektrische Maschine 2 und der Verbrennungsmotor 1 beschleunigen abhängig von einem Fahrerwunsch und der Drehmomentverteilung einer Hybridstrategie.

Für den Fall, dass das Hybridfahrzeug elektrisch betriebene Nebenaggregate aufweist, wird die Leistungsaufnahme solcher elektrischer Nebenaggregate während des oben beschriebenen Zustartens des Verbrennungsmotors 1 reduziert, damit die elektrische Maschine 2 ausreichend Moment für den Anfahrvorgang und das Zustarten des Verbrennungsmotors 1 zur Verfügung stellen kann. Dies kann über eine entsprechende Priorisierung steuerungsseitig realisiert werden.

Das erfindungsgemäße Verfahren wird von einer erfindungsgemäßen Steuerungseinrichtung, bei welcher es sich vorzugsweise um die Hybridsteuerungseinrichtung 9 handelt, durchgeführt.

Zur Durchführung des erfindungsgemäßen Verfahrens tauscht die erfindungsgemäße Steuerungseinrichtung mit den beteiligten Baugruppen Daten über Datenschnittstellen aus, um den beteiligten Baugruppen entsprechende Ansteuersignale bereitzustellen. Dieser Datenaustausch kann direkt oder indirekt unter Zwischenschaltung einer weiteren Steuerungseinrichtung erfolgen.

Die das erfindungsgemäße Verfahren ausführende, erfindungsgemäße Steuerungseinrichtung verfügt neben den Datenschnittstellen über einen Prozessor, um das erfindungsgemäße Verfahren sowie hierzu erforderliche Berechnungen auszuführen. Ferner verfügt die erfindungsgemäße Steuerungseinrichtung über einen Speicher, um im Zuge des erfindungsgemäßen Verfahrens Daten zu speichern.

### Bezugszeichen

- 1: Verbrennungsmotor
- 2: elektrische Maschine
- 3: Abtrieb
- 4: Getriebe
- 5: Trennkupplung
- 6: Schaltelement
- 7: Motorsteuerungseinrichtung
- 8: Getriebesteuerungseinrichtung
- 9: Hybridsteuerungseinrichtung
- 10: Schaltelement
- 11: Wandlerpumpe
- 12: Wandlerturbine
- 13: Wandlerüberbrückungskupplung

## Patentansprüche

1. Verfahren zum Betreiben eines Hybridfahrzeugs, mit einem einen Verbrennungsmotor (1) und eine elektrische Maschine (2) aufweisenden Hybridantrieb und mit einer Start-Stopp-Automatik für den Verbrennungsmotor (1) des Hybridantriebs, wobei zum Starten des Verbrennungsmotors (1) aus dem Stillstand des Hybridfahrzeugs heraus der Verbrennungsmotor (1) mit Hilfe der elektrische Maschine (2) zunächst in einem drehzahlgeregelten Betrieb derselben auf einen Mindestdrehzahl anschleppt und erst anschließend der Verbrennungsmotor (1) durch Einbringen von Kraftstoff in denselben befeuert wird, **dadurch gekennzeichnet, dass** zur Verkürzung einer Verzögerungszeit zwischen einer Startanforderung für den Verbrennungsmotor (1) und einem Anfahrvorgang des Hybridfahrzeugs während des Anschleppens des Verbrennungsmotor (1) auf die Mindestdrehzahl bei einem in einem Getriebe (4) des Hybridfahrzeugs eingelegten Gang ein zwischen die elektrische Maschine (2) und einen Abtrieb (3) des Hybridfahrzeugs geschaltetes Schaltelement (6, 10, 13) im Schlupf betrieben wird, nämlich derart, dass mit dem Erreichen einer unterhalb der Mindestdrehzahl liegenden Anfahrdrehzahl der Anfahrvorgang beginnt.

2. Verfahren nach Anspruch 1, **dadurch gekennzeichnet, dass** hierzu das im Schlupf betriebene Schaltelement (6, 10, 13) spätestens mit Erreichen der Anfahrdrehzahl soweit geschlossen wird, dass dasselbe ein einem Anfahrwiderstand entsprechendes Drehmomentäquivalent überträgt.

3. Verfahren nach Anspruch 2, **dadurch gekennzeichnet, dass** hierzu das im Schlupf betriebene Schaltelement (6, 10, 13) mit Erreichen der Anfahrdrehzahl soweit geschlossen wird, dass dasselbe ein einem Anfahrwiderstand entsprechendes Drehmomentäquivalent überträgt.

4. Verfahren nach einem oder mehreren der Ansprüche 1 bis 3, **dadurch gekennzeichnet, dass** die elektrische Maschine (2) im drehzahlgeregelten Betrieb während des Anfahrvorgangs ein Anschleppmoment für den Verbrennungsmotor (1) und weiterhin ein Anfahrmoment für das Hybridfahrzeug bereitstellt.

5. Verfahren nach einem oder mehreren der Ansprüche 1 bis 4, **dadurch gekennzeichnet, dass** dann, wenn eine Schlupfdrehzahldifferenz an dem im Schlupf betriebenen Schaltelement (6, 10, 13) vor Beendigung des Verbrennungsmotorstarts zu gering wird, das im Schlupf betriebene Schaltelement (6, 10, 13) durch Absenken der Übertragungsfähigkeit desselben weiter geöffnet wird.

6. Verfahren nach einem oder mehreren der Ansprüche 1 bis 5, **dadurch gekennzeichnet, dass** das im Schlupf betriebene Schaltelement ein getriebeinternes Schaltelement (6) ist.

7. Verfahren nach einem oder mehreren der Ansprüche 1 bis 5, **dadurch gekennzeichnet, dass** das im Schlupf betriebene Schaltelement ein getriebeexternes Schaltelement (10) ist.

8. Verfahren nach einem oder mehreren der Ansprüche 1 bis 5, **dadurch gekennzeichnet, dass** das im Schlupf betriebene Schaltelement eine Wandlerüberbrückungskupplung (13) ist.

9. Verfahren nach einem oder mehreren der Ansprüche 1 bis 8, **dadurch gekennzeichnet, dass** dann, wenn mit der Befeuerung des Verbrennungsmotors (1) begonnen wurde, eine zwischen den Verbrennungsmotor (1) und die elektrische Maschine (2) geschaltete Trennkupplung (5) derart geöffnet wird, dass der Verbrennungsmotor (1) nach Beginn der Befeuerung aus eigner Kraft auf Leerlaufdrehzahl hoch läuft.

10. Verfahren nach einem oder mehreren der Ansprüche 1 bis 9, **dadurch gekennzeichnet, dass** während des Zustartens des Verbrennungsmotors (1) eine Leistungsaufnahme elektrischer Nebenaggregate reduziert wird.

11. Steuerungseinrichtung eines Hybridfahrzeugs, **gekennzeichnet durch** Mittel zur Durchführung des Verfahrens nach einem der Ansprüche 1 bis 10.
